# EUROPÄISCHE PATENTSCHRIFT

(11) **EP 2 227 357 B1**
(45) Veröffentlichungstag und Bekanntmachung des Hinweises auf die Patenterteilung: **05.08.2020**
(21) Anmeldenummer: 08858666.4
(22) Anmeldetag: 29.10.2008
(51) Int. Cl.: B25J 9/16, B25J 19/06, H02P 3/22

(54) **INDUSTRIEROBOTER MIT EINER REDUNDANTEN NOTBREMSSCHALTUNG**
INDUSTRIAL ROBOT HAVING REDUNDANT EMERGENCY BRAKE CIRCUIT
ROBOT INDUSTRIEL DOTÉ D'UN CIRCUIT REDONDANT DE FREINAGE D'URGENCE

(30) Priorität: 11.12.2007 DE 102007059492
(43) Veröffentlichungstag der Anmeldung: 15.09.2010
(73) Patentinhaber: KUKA Deutschland GmbH, 86165 Augsburg (DE)
(72) Erfinder: HOFMANN, Josef, 86709 Wolferstadt (DE); SCHWARZ, Richard, 86316 Friedberg (DE); MARX, Sönke, 86163 Augsburg (DE)
(74) Vertreter: Böss, Dieter Alexander
(86) Internationale Anmeldenummer: PCT/EP2008/064625
(87) Internationale Veröffentlichungsnummer: WO 2009/074396

(56) Entgegenhaltungen:
- EP-A- 0 742 637
- EP-A- 0 974 483
- DE-A1- 19 835 576
- JP-A- 2007 037 301
- US-A1- 2004 160 208

## Beschreibung

Die Erfindung betrifft einen Industrieroboter.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen im Wesentlichen einen Roboterarm mit mehreren Achsen und Hebeln auf, die von Antrieben bewegt werden. Die Antriebe sind z.B. elektrische Antriebe.

In einer Notsituation, z.B. wenn eine Person eine den Industrieroboter umgebende Schutzvorrichtung betritt, ist es notwendig, die Bewegung des Industrieroboters zuverlässig zu stoppen.

Die JP 2007037301 offenbart eine Robotersteuerung, die einen elektrischen Antrieb steuert. Dieser kann für eine Notbremsung mittels zweier elektrischer Strompfade kurzgeschlossen werden, und zwar einerseits über eine kurzgeschlossene Halbbrücke seines Wechselrichters und über einen Widerstand mittels eines MOSFETS.

Die Aufgabe der vorliegenden Erfindung ist es daher, einen Industrieroboter mit wenigstens einem elektrischen Antrieb anzugeben, der eingerichtet ist, den elektrischen Motor des elektrischen Antriebs möglichst sicher und zuverlässig im Rahmen einer Notbremsung zu stoppen.

Die Aufgabe der Erfindung wird gelöst durch einen Industrieroboter, aufweisend einen Roboterarm, der mehrere Achsen und wenigstens einen elektrischen Antrieb aufweist, der einen elektrischen Motor und eine den elektrischen Motor ansteuernde Leistungselektronik aufweist und eingerichtet ist, die relevante Achse zu bewegen, wobei der Industrieroboter eingerichtet ist, den elektrischen Motor im Rahmen einer Notbremsung gleichzeitig mittels zweier voneinander unabhängiger elektrischer Strompfade kurz zu schließen, wobei der elektrische Motor des wenigstens einen elektrischen Antriebs ein Drehstrommotor ist und die Leistungselektronik des wenigstens einen elektrischen Antriebs einen den Motor antreibenden Dreiphasen-Wechselrichter und einen, einen Zwischenkreis-Kondensator aufweisenden und dem Dreiphasen-Wechselrichter vorgeschalteten Zwischenkreis aufweist, wobei der Dreiphasen-Wechselrichter eine erste Halbbrücke und eine zweite Halbbrücke aufweist, die jeweils vom Industrieroboter gesteuerte Halbleiterschalter aufweisen, und der Industrieroboter für die Notbremsung eingerichtet ist, die Halbleiterschalter der ersten Halbbrücke zu sperren und die Halbleiterschalter der zweiten Halbbrücke zu schließen, so dass einer der beiden elektrischen Strompfade für die Notbremsung durch die Halbleiterschalter der zweiten Halbbrücke verläuft, wobei der Industrieroboter eingerichtet ist, für die Notbremsung die Halbleiterschalter der ersten Halbbrücke über einen ersten Kanal zu sperren und die Halbleiterschalter der zweiten Halbbrücke zu schließen, und über einen vom ersten Kanal unterschiedlichen zweiten Kanal eine externe elektrische Spannung für den Zwischenkreis abzuschalten, und wobei der Zwischenkreis einen ersten Bremswiderstand und einen ersten Schalter aufweist und der Industrieroboter derart eingerichtet ist, während der Notbremsung den ersten Schalter zu schließen, um den Bremswiderstand parallel zum Zwischenkreiskondensator zu schalten, so dass einer der beiden elektrischen Strompfade für die Notbremsung durch den ersten Bremswiderstand verläuft und der Industrieroboter einen zweiten Schalter aufweist und derart eingerichtet ist, während der Notbremsung den zweiten Schalter zu schließen, um den Motor direkt kurz zu schließen.

Der erfindungsgemäße Industrieroboter weist den Roboterarm auf, der wiederum mehrere Achsen umfasst, die jeweils von einem Antrieb bewegt werden können. Wenigstens einer dieser Antriebe ist ein elektrischer Antrieb. Elektrische Antriebe weisen in allgemein bekannter Weise einen elektrischen Motor und eine den elektrischen Motor ansteuernde Leistungselektronik auf. Für die Bewegung des Motors wird die Leistungselektronik z.B. von einer Steuervorrichtung des erfindungsgemäßen Industrieroboters gesteuert oder geregelt.

Der elektrische Motor des wenigstens einen elektrischen Antriebs ist ein Drehstrommotor, beispielsweise ein Dreiphasen-Synchronmotor oder Asynchronmotor, und die relevante Leistungselektronik weist einen den Drehstrommotor antreibenden Dreiphasen-Wechselrichter und einen, einen Zwischenkreis-Kondensator aufweisenden und dem Dreiphasen-Wechselrichter vorgeschalteten Zwischenkreis auf. Der Wechselrichter ist z.B. ein Frequenzumrichter, der in allgemein bekannter Weise, z.B. mittels Puls-Weiten-Modulation, aus einer Gleichspannung des Zwischenkreises eine dreiphasige Wechselspannung mit einstellbarer Frequenz ihrer Grundschwingung erzeugt.

Ein solcher Dreiphasen-Wechselrichter weist die erste Halbbrücke und die zweite Halbbrücke auf, die jeweils von einer Steuerungsvorrichtung des Industrieroboters gesteuerte Halbleiterschalter umfassen. Die Halbleiterschalter sind z.B. Leistungstransistoren, beispielsweise IGBTs, deren Emitter-Kollektor Pfade mittels geeigneter Ansteuerung ihrer Gates sperren oder durchlässig sind. Durch geeignetes Ansteuern der Gates der Leistungstransistoren werden somit Halbleiterschalter realisiert. Jede der Halbbrücken kann je einen Halbleiterschalter pro Phase des Drehstrommotors, also jeweils insgesamt drei Halbleiterschalter aufweisen. Die einzelnen Halbleiterschalter weisen in der Regel noch parallel zu diesen geschaltete Freilaufdioden auf. Durch Hin- und Herschalten der Halbleiterschalter kann jede der Motorklemmen des elektrischen Motors wahlweise an der positiven oder an der negativen Gleichspannung des Zwischenkreises angelegt werden. Durch geeignetes Ansteuern der Halbleiterschalter kann somit die Frequenz der Grundschwingung der an dem Motor anliegenden dreiphasigen Spannung in allgemein bekannter Weise gesteuert bzw. geregelt werden. Dank der Freilaufdioden können die elektrischen Ströme in den Zuleitungen zum Motor in beliebige Richtungen fließen.

Die Gleichspannung kann z.B. mittels eines Gleichrichters aus der Netz-Wechselspannung erzeugt werden, die der Zwischenkreiskondensator glättet. Handelt es sich bei der Netzspannung um eine dreiphasige Netzspannung, dann handelt es sich bei dem Gleichrichter beispielsweise um einen Drehstrom-Brückengleichrichter.

In einer Notsituation, beispielsweise wenn sich eine Person dem Industrieroboter gefährlich nähert, müssen die Antriebe, also auch der wenigstens eine elektrische Antrieb bzw. dessen elektrischer Motor, zuverlässig zum Stillstand gebracht werden. Dies ist bei elektrischen Motoren möglich, indem diese kurzgeschlossen werden, so dass der Motor aufgrund des dadurch fließenden elektrischen Stroms gebremst wird. Bei einem Drehstrommotor ist das dadurch resultierende Bremsmoment bei einem Kurzschließen seiner drei Phasen am größten, der Motor bremst jedoch auch noch, wenn nur zwei (oder gar nur eine der drei Phasen gegen Erde) kurz geschlossen werden.

Um nun sicher zu stellen, dass der elektrische Motor in der Notsituation sicher und zuverlässig bremst, also sicher und zuverlässig kurz geschlossen wird, ist der erfindungsgemäße Industrieroboter eingerichtet, den elektrischen Motor im Rahmen der Notbremsung gleichzeitig mittels zweier voneinander unabhängiger elektrischer Strompfade kurz zu schließen. Fällt einer der beiden Strompfade teilweise oder komplett aus, dann wird der elektrische Motor immer noch zuverlässig über den anderen Strompfad kurz geschlossen. Somit wird der elektrische Motor des erfindungsgemäßen Industrieroboters zuverlässig mittels zweier von einander unabhängiger Kurzschluss-Bremsmethoden in der Notsituation gebremst.

Der erfindungsgemäße Industrieroboter ist derart eingerichtet, dass er für die Notbremsung die Halbleiterschalter der ersten Halbbrücke sperrt und die Halbleiterschalter der zweiten Halbbrücke schließt, so dass einer der beiden elektrischen Strompfade für die Notbremsung durch die Halbleiterschalter der zweiten Halbbrücke verläuft. Diese Art der Notbremsung kann in relativ einfacher Weise ausgeführt werden.

Der erfindungsgemäße Industrieroboter ist ferner eingerichtet, für die Notbremsung die Halbleiterschalter der ersten Halbbrücke über einen ersten Kanal zu sperren und die Halbleiterschalter der zweiten Halbbrücke zu schließen, und über einen vom ersten Kanal unterschiedlichen zweiten Kanal eine externe elektrische Spannung für den Zwischenkreis abzuschalten. Die externe elektrische Spannung ist z.B. die Netzspannung des Gleichrichters, d.h. der Gleichrichter wird durch Abschalten der Netzspannung vom Netz getrennt. Die externe elektrische Spannung kann aber z.B. auch abgeschaltet werden, indem der Gleichrichter vom Zwischenkreis getrennt wird.

Nach einer Variante des erfindungsgemäßen Industrieroboters weist der Zwischenkreis einen ersten Bremswiderstand und einen ersten Schalter auf, wobei der erfindungsgemäße Industrieroboter derart eingerichtet ist, während der Notbremsung den ersten Schalter zu schließen, um den Bremswiderstand parallel zum Zwischenkreiskondensator zu schalten, so dass einer der beiden elektrischen Strompfade für die Notbremsung durch den ersten Bremswiderstand verläuft. Der erste Schalter weist z.B. einen ersten Halbleiterschalter und/oder einen von einem ersten Relais gesteuerten ersten mechanischen Schalter auf. Im normalen Betrieb des Industrieroboters ist der erste Schalter geöffnet und nur für die Kurzschlussbremsung schließt der Industrieroboter den ersten Schalter. Dadurch wird der Zwischenkreiskondensator und somit der elektrische Motor über die Freilaufdioden kurz geschlossen. Der erste Bremswiderstand kann aber auch im normalen Betrieb kurzzeitig zugeschaltet werden, wenn z.B. die elektrische Spannung des Zwischenkreiskondensators eine maximal zulässige elektrische Spannung überschreitet.

Wird z.B. der elektrische Motor im Rahmen der Notbremsung sowohl über den Bremswiderstand des Zwischenkreises als auch über den Wechselrichter kurz geschlossen, so wird der elektrische Strom des Motors im Wesentlichen über die geschlossenen Halbleiterschalter der zweiten Halbbrücke fließen. Ist z.B. einer oder sind mehrere der Halbleiterschalter defekt oder funktioniert die Ansteuerung der Halbleiterschalter nicht zufriedenstellend, dann kann der elektrische Strom über den Bremswiderstand des Zwischenkreises fließen, wodurch eine zuverlässige Notbremsung sicher gestellt ist.

Der erfindungsgemäße Industrieroboter kann nach einer Variante einen zweiten Schalter aufweisen, wobei der erfindungsgemäße Industrieroboter derart eingerichtet ist, während der Notbremsung den zweiten Schalter zu schließen, um den Motor direkt kurz zu schließen. Der erfindungsgemäße Industrieroboter kann aber auch einen zweiten Bremswiderstand aufweisen, wobei der erfindungsgemäße Industrieroboter derart eingerichtet ist, während der Notbremsung den zweiten Schalter zu schließen, um den Motor direkt über den zweiten Bremswiderstand kurz zu schließen, so dass einer der beiden elektrischen Strompfade für die Notbremsung durch den zweiten Bremswiderstand verläuft. Der zweite Schalter weist beispielsweise einen zweiten Halbleiterschalter und/oder einen von einem zweiten Relais gesteuerten zweiten mechanischen Schalter auf. Gemäß dieser Variante werden also für die Notbremsung die Motorwicklungen direkt, z.B. in der Zuleitung von der Leistungselektronik zum Motor, über den zweiten Bremswiderstand kurz geschlossen.

Die Ansteuerpfade und/oder Strompfade können auch überprüft und/oder getestet werden.

Beispielsweise können die Ansteuersignale zum Aktivieren der elektrischen Strompfade einer Logik zurückgeführt und mit Soll-Werten verglichen werden.

Im normalen Betrieb können die potenziellen Strompfade überprüft werden, da nur im funktionsfähigen Fall ein fehlerfreier motorischer Betrieb möglich ist.

Wird der Motor z.B. mittels des zweiten Widerstands gebremst, kann z.B. das Relais des zweiten Schalters einen Hilfskontakt aufweisen, aufgrund dessen beispielsweise bei einem Aktivieren des Relais ein Signal erzeugt wird. Durch ein Auswerten dieses Signals kann dann auf ein zuverlässiges Schließen des zweiten mechanischen Schalters geschlossen werden. Alternativ oder zusätzlich kann auch das bremsende Moment des abbremsenden Motors beispielsweise aufgrund des Motorstroms berechnet oder gemessen werden.

Das Funktionieren des Wechselrichters kann überprüft werden, indem bei noch drehendem Motor der elektrische Strom des Motors ermittelt und ausgewertet wird. Bei korrekt arbeitendem Wechselrichter darf zusätzlich kein elektrischer Strom durch die Freilaufdioden der ersten Halbbrücke fließen. Dies kann z.B. dadurch überprüft werden, indem bei abgeschalteter Spannung für den Zwischenkreis die Entladung des Zwischenkreiskondensators über den ersten Bremswiderstand ermittelt und ausgewertet wird. Entspricht die Entladung der Selbstentladungskurve, die sich aufgrund des ohmschen Widerstandes des ersten Bremswiderstandes und der Kapazität des Zwischenkreiskondensators ergibt, dann fließt kein elektrischer Strom über die Freilaufdioden der ersten Halbbrücke.

Es kann auch bei noch drehendem Motor das bremsende Moment des Motors gemessen oder berechnet werden.

Der Zwischenkreis kann auch bei stehendem Motor überprüft werden, beispielsweise durch Messung und Auswertung der elektrischen Spannung des Zwischenkreiskondensators. Nach Zuschalten des ersten Bremswiderstandes muss die elektrische Spannung in Abhängigkeit von der Kapazität des Zwischenkreiskondensators und des ohmschen Widerstands des ersten Bremswiderstandes und der eventuell vom drehenden Motor rückgespeisten Energie abfallen. Es kann auch der elektrische Strom durch den ersten Bremswiderstand ermittelt und ausgewertet werden oder bei noch drehendem Motor das bremsende Moment des Motors ermittelt und analysiert werden.

Ausführungsbeispiele der Erfindung sind exemplarisch in den beigefügten schematischen Zeichnungen dargestellt. Es zeigen:
- Fig. 1: einen Industrieroboter,
- Fig. 2: einen elektrischen Antrieb des Industrieroboters in blockschaltbildartiger Darstellung,
- Fig. 3: eine Detaildarstellung eines Teils des elektrischen Antriebs,
- Figs. 4 und 5: Betriebszustände veranschaulichende Darstellungen der Teildarstellung des elektrischen Antriebs,
- Fig. 6: einen Zwischenkreis einer Leistungselektronik und
- Fig. 7: eine zum Bremsen eines Motors geeignete Schaltung.

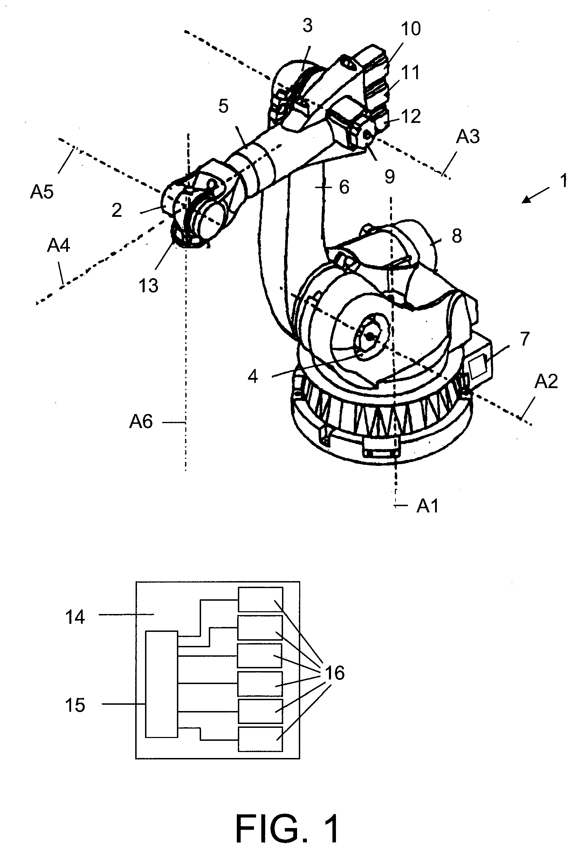

Die Fig. 1 zeigt einen Industrieroboters 1 mit einer Kinematik für Bewegungen in sechs Freiheitsgraden. Der Industrieroboter 1 weist in allgemein bekannter Weise Gelenke 2 bis 5, Hebel 6, sechs Bewegungsachsen A1 bis A6 und einen Flansch 13 auf.

Jede der Achsen A1-A6 wird von einem Antrieb bewegt, die im Falle des vorliegenden Ausführungsbeispiels elektrische Antriebe sind und jeweils einen elektrischen Motor 7-12 aufweisen. Dabei bewegt der Motor 7 die Achse A1, der Motor 8 die Achse A2, der Motor 9 die Achse A3 und die Motoren 10-12 die Achsen A4-A6 über in der Fig. 1 nicht näher, dem Fachmann jedoch allgemein bekannte Getriebe.

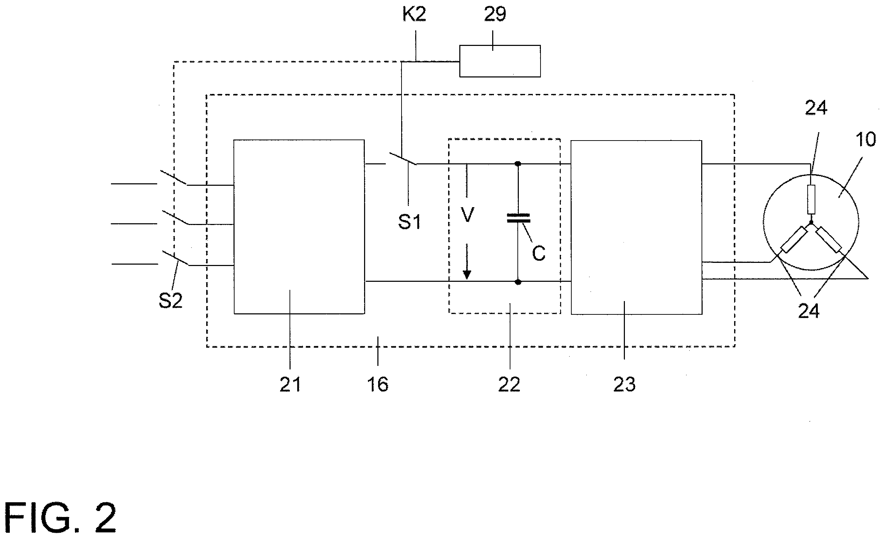

Im Falle des vorliegenden Ausführungsbeispiels handelt es sich bei den elektrischen Motoren 7-12 um Drehstrommotoren, insbesondere um Synchronmotoren. Die Motoren 7-12 werden jeweils von Leistungselektroniken 16 angesteuert, die im Falle des vorliegenden Ausführungsbeispiels in einer Steuerungsvorrichtung 14 angeordnet sind. Die Leistungselektroniken 16 sind jeweils mit ihren elektrischen Motoren 7-12 in nicht dargestellter Weise elektrisch verbunden. Eine der Leistungselektroniken 16 ist beispielhaft für den Motor 10 in der Fig. 2 blockschaltbildartig gezeigt.

Die elektrischen Antriebe bzw. die Leistungselektroniken 16 der elektrischen Motoren 7-12 sind mit einem Steuerrechner 15 verbunden, auf dem ein geeignetes und dem Fachmann im Grundsatz bekanntes Rechenprogramm läuft, das die Leistungselektroniken 16 in geeigneter und allgemein bekannter Weise ansteuert, damit sich der Industrieroboters 1 wie gewollt bewegt. Der Steuerrechner 15 ist im Falle des vorliegenden Ausführungsbeispiels mit den Leistungselektroniken 16 im Gehäuse der Steuerungsvorrichtung 14 angeordnet.

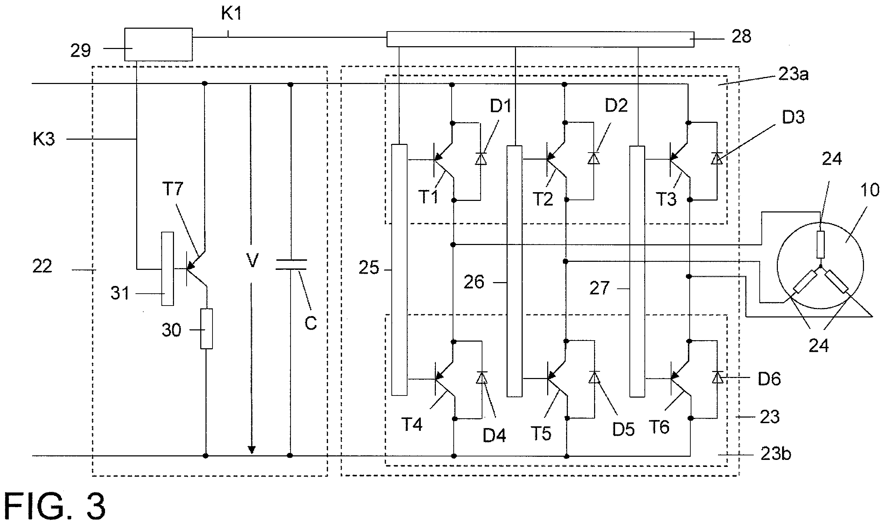

Im Falle des vorliegenden Ausführungsbeispiels umfasst jede der Leistungselektroniken 16 für die elektrischen Motoren 7-12 einen Gleichrichter 21, einen Zwischenkreis 22 und einen Wechselrichter 23. Die Fig. 3 zeigt den Zwischenkreis 22 und den Wechselrichter 23 in einer genaueren Darstellung.

Der Zwischenkreis 22 weist einen Kondensator C auf und der Gleichrichter 21 erzeugt aus der Dreiphasen-Netzspannung in allgemein bekannter Weise eine durch den Kondensator C des Zwischenkreises 22 geglättete Gleichspannung V. Die geglättete Gleichspannung V ist die Eingangsspannung des Wechselrichters 23, der aus der Gleichspannung V in allgemein bekannter Weise eine dreiphasige Spannung mit einstellbarer Frequenz ihrer Grundschwingung erzeugt. Die dreiphasige Spannung wird den Motorklemmen 24 des Motors 10 zugeführt und wird z.B. mittel Puls-Weiten-Modulation (PWM) erzeugt. Der Wechselrichter 23 weist im Falle des vorliegenden Ausführungsbeispiels eine erste Halbbrücke 23a und eine zweite Halbbrücke 23b auf, die jeweils drei Halbleiterschalter mit dazugehörigen Freilaufdioden D1-D6 aufweisen. Im Falle des vorliegenden Ausführungsbeispiels handelt es sich bei den Halbleiterschaltern um Leistungstransistoren T1-T6, die z.B. IGBTs sind. Die Leistungstransistoren der ersten Halbbrücke 23a und die dazugehörigen Freilaufdioden sind mit den Bezugszeichen T1-T3 bzw. D1-D3 und die Leistungstransistoren der zweiten Halbbrücke 23b und die dazugehörigen Freilaufdioden sind mit den Bezugszeichen T4-T6 bzw. D4-D6 versehen.

In Allgemein bekannter Weise sind die Emitter der Leistungstransistoren T1-T3 der ersten Halbbrücke 23a mit einer der Klemmen des Kondensators C und die Kollektoren der Leistungstransistoren T1-T3 der ersten Halbbrücke 23a mit den Motorklemmen 24 des elektrischen Motors 10 elektrisch verbunden. Die Kollektoren der Leistungstransistoren T4-T6 der zweiten Halbbrücke 23b sind mit der anderen Klemme des Kondensators C und die Emitter der Leistungstransistoren T4-T6 der zweiten Halbbrücke 23b sind mit den Motorklemmen 24 des elektrischen Motors 10 elektrisch verbunden.

Die Gates der Leitungstransistoren T1-T6 sind mit Treiberschaltungen 25-27 verbunden, die die als Halbleiterschalter ausgebildeten Leistungstransistoren T1-T6 in allgemein bekannter Weise ein und ausschalten, so dass jede der Motorklemmen 24 des Motors 10 wahlweise an der positiven oder an der negativen Gleichspannung V des Zwischenkreises 22 anliegt. Durch geeignetes Ansteuern der Leistungstransistoren T1-T6 kann somit die Frequenz der Grundschwingung der an dem Motor 10 anliegenden dreiphasigen Spannung in allgemein bekannter Weise gesteuert bzw. geregelt werden.

Im Falle des vorliegenden Ausführungsbeispiels werden die Treiberschaltungen 25-27 von einer ersten Teillogikschaltung 28 angesteuert, die wiederum mit einer Sicherheitslogikschaltung 29 verbunden ist. Die Sicherheitslogikschaltung 29 ist wiederum in nicht dargestellter Weise mit dem Steuerrechner 15 verbunden oder ist Teil des Steuerrechners 15.

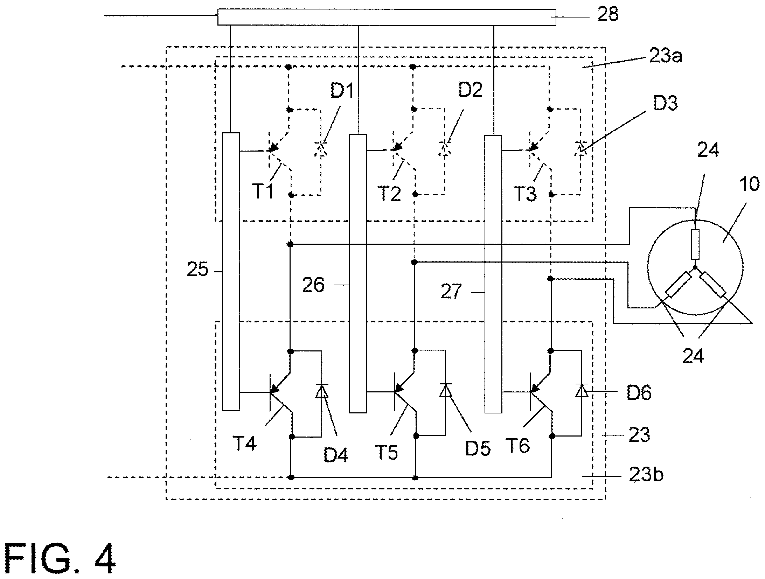

Im Betrieb des Industrieroboters 1 kann es vorkommen, dass die Motoren 7-12 sicher gebremst werden müssen. Dies wird im Falle des vorliegenden Ausführungsbeispiels dadurch erreicht, dass die Sicherheitslogikschaltung 29 der Teillogikschaltung 28 ein Signal über einen ersten Kanal K1 zuführt, damit diese die Treiberschaltungen 25-27 derart ansteuert, dass die Leistungstransistoren T1-T3 der ersten Halbbrücke 23a ausgeschaltet (gesperrt) und die Leistungstransistoren T4-T6 der zweiten Halbbrücke 23b eingeschaltet werden. Dadurch werden die Ständerwicklungen des Motors 10 über die Leistungstransistoren T4-T6 der zweiten Halbbrücke 23b kurz geschlossen. Dies ist in der Fig. 4 angedeutet, indem die Bauteile der ersten Halbbrücke 23a gestrichelt und die Bauteile der zweiten Halbbrücke 23b mit durchgezogenen Linien dargestellt sind. Der vom Motor 10 erzeugte elektrische Strom während des Abbremsens fließt über die Leistungstransistoren T4-T6.

Gleichzeit sendet die Sicherheitslogikschaltung 29 über einen vom ersten Kanal K2 unabhängigen zweiten Kanal K2 ein Signal an einen in der Fig. 2 gezeigten Schalter S1, der den Gleichrichter 21 vom Zwischenkreis 22 trennt. Alternativ oder zusätzlich kann der Gleichrichter 21 mittels eines dreiphasigen Schalters S2 über den Kanal K2 von der Netzspannung getrennt werden.

Um sicher zu stellen, dass der Motor 10 zuverlässig und sicher mittels Kurzschlussbremsung gebremst wird, auch wenn z.B. Bauteile des Wechselrichters 23 und/oder eine oder mehrere Treiberschaltungen 25-27 defekt sind, weisen die elektrischen Antriebe des Industrieroboters 1 jeweils eine zweite Möglichkeit auf, ihre Motoren 7-12 mittels Kurzschlussbremsung zu bremsen.

Im Falle des vorliegenden Ausführungsbeispiels wird die zweite Möglichkeit, den Motor 10 zu bremsen, mittels eines Bremswiderstands 30 des Zwischenkreises 22 ermöglicht, der mittels eines als Halbleiterschalter ausgebildeten Leistungstransistors T7 parallel zum Kondensator C geschaltet werden kann. Der Leitungstransistor T7 ist z.B. ebenfalls ein IGBT und wird mittels einer Treiberschaltung 31, die mit der Sicherheitslogikschaltung 29 verbunden ist, ein und ausgeschaltet.

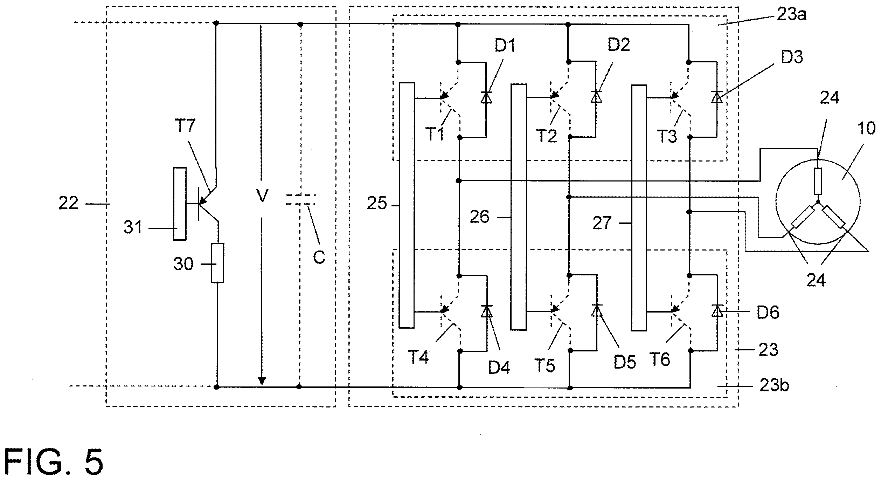

Im Betrieb des Industrieroboters 1 ist der Leistungstransistor T2 ausgeschaltet. Für eine sicher Kurzschlussbremsung sendet die Sicherheitslogikschaltung 29 nicht nur ein Signal über den ersten Kanal K1 an die Teillogikschaltung 28, um den Motor 10 mittels des Wechselrichters 23 wie oben stehend erläutert zu bremsen, sondern sendet auch ein Signal über einen von den ersten und zweiten Kanälen K1, K2 unabhängigen dritten Kanal K3 an die Treiberschaltung 31, um den Leistungstransistor T7 des Zwischenkreises 22 zu schließen, so dass der Kondensator C über den Bremswiderstand 30 kurz geschlossen ist. Somit ist auch der Motor 10 über den Bremswiderstand 30 kurzgeschlossen. Dies ist in der Fig. 5 angedeutet, in der Bauteile, durch die ein vom Motor 10 erzeugter elektrischer Strom während des Bremsens fließt, mit durchgezogenen Linien dargestellt sind. In der in der Fig. 5 gezeigten Darstellung wird angenommen, dass alle Leistungstransistoren T1-T6 sperren, so dass der elektrische Strom während des Bremsens des Motors 10 über die Freilaufdioden D1-D6 fließt. Arbeitet der Wechselrichter 23 während der Kurzschlussbremsung korrekt, dann fließt der vom Motor 10 erzeugte elektrische Strom über die Leistungstransistoren T4-T6 der zweiten Halbbrücke 23b.

Somit wird sicher gestellt, dass der Motor 10 zuverlässig gebremst wird, auch wenn eine der beiden Möglichkeiten des Bremsens ausfällt.

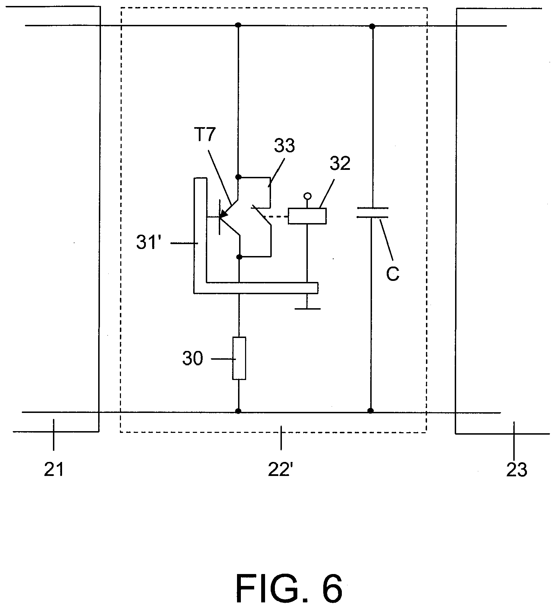

Die Fig. 6 zeigt einen alternativen Zwischenkreis 22', der anstelle des in den Figuren 3 und 5 gezeigten Zwischenkreis 22 für den Wechselrichter 23 verwendet werden kann. Der in der Fig. 6 gezeigte Zwischenkreis 22' unterscheidet sich im Wesentlichen durch ein zusätzliches Relais 32 und einen mittels des Relais 32 schaltbaren mechanischen Schalter 33, der parallel zum Leistungstransistor T7 des Zwischenkreises 22' geschaltet ist. Anstelle einer Treiberschaltung 31 weist der 'Zwischenkreis 22' eine Treiberschaltung 31' auf, die nicht nur den Leistungstransistor T7, sondern auch das Relais 32 steuert.

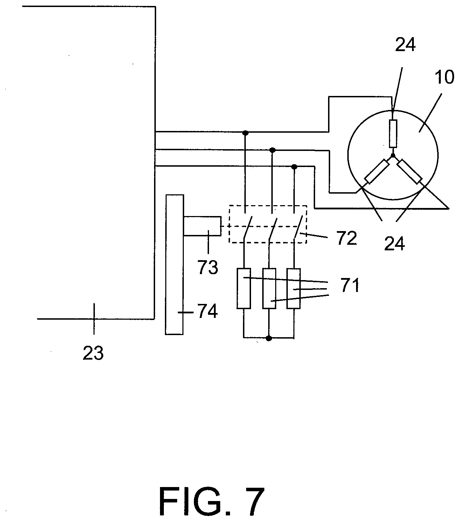

Im normalen Betrieb des Industrieroboters 1 sind der mechanische Schalter 33 und der Leistungstransistor T7 des Zwischenkreises 22' geöffnet. Für eine sichere Kurzschlussbremsung sendet die Sicherheitslogikschaltung 29 über den dritten Kanal K3 ein Signal an die Treiberschaltung 31', so dass diese sowohl den Leistungsschalter T7 schließt als auch das Relais 32 veranlasst, den mechanischen Schalter 33 zu schließen. Somit wird der Bremswiderstand 30 nicht nur über den Leistungsschalter T7, sondern auch über den mechanischen Schalter 33 parallel zum Kondensator C geschaltet. Alternativ ist es auch möglich, dass der Zwischenkreis 22' keinen Leistungstransistor T7 umfasst, sondern den Bremswiderstand 30 nur über den mechanischen Schalter 33 zuschalten kann. Die Fig. 7 zeigt eine weitere Möglichkeit, den Motor 10 zu bremsen. Im Falle des in der Fig. 7 dargestellten Ausführungsbeispiels kann der Motor 7 mittels dreier in Stern geschalteter Widerstände 71 über einen Schalter kurzgeschlossen werden. Der Schalter kann z.B. als Halbleiterschalter in Form eines Leistungstransistors, beispielsweise eines IGBTs, oder, wie es in der Fig. 7 gezeigt ist, durch einen mechanischen Schalter 72, der z.B. mittels eines Relais 73 gesteuert wird, realisiert werden. Im normalen Betrieb des Industrieroboters 1 ist der Schalter 72 geöffnet. Für eine sichere Bremsung sendet die Sicherheitslogikschaltung 29 ein Signal an eine Treiberschaltung 74, die daraufhin das Relais 73 aktiviert, damit dieses den Schalter 71 schließt. Dadurch ist der Motor 10 kurzgeschlossen und bremst. Diese Möglichkeit des Bremsens des Motors 10 wird für das sichere Bremsen parallel zum Bremsen mittels des Wechselrichters 23, wie obenstehend beschrieben, verwendet. Es ist aber auch möglich, den Motor 10 ohne die Widerstände 71 für die Bremsung direkt kurz zu schließen. Dann benötigt man keinen dreiphasigen mechanischen Schalter, sondern alle drei Phasen des Motors 10 können mit zwei Schaltern kurz geschlossen werden.

Alternativ ist es auch möglich, dass zusätzlich der Motor 10 mittels des Bremswiderstandes 30 und der Widerstände 71 gebremst wird.

Es ist aber auch möglich, dass für ein sicheres Bremsen der Motor 10 mittels des Bremswiderstandes 30, der Widerstände 71 und des Wechselrichters 23 gebremst wird.

Zusätzlich kann in den vorliegenden Ausführungsbeispielen vorgesehen sein, die für das Bremsen der Motoren 7-12 vorgesehenen Bauteile zu überprüfen.

Wird der Motor 10 mittels der Widerstände 71 gebremst, kann z.B. das Relais 73 einen Hilfskontakt aufweisen, aufgrund dessen beispielsweise bei einem Aktivieren des Relais ein Signal erzeugt wird. Durch ein Auswerten dieses Signals kann dann auf ein zuverlässiges Schließen des Schalters 72 geschlossen werden. Alternativ oder zusätzlich kann auch das bremsende Moment des abbremsenden Motors 10 beispielsweise aufgrund des Motorstroms berechnet oder gemessen werden.

Das Funktionieren des Wechselrichters 23 kann überprüft werden, indem bei noch drehendem Motor 10 der elektrische Strom des Motors 10 ermittelt und ausgewertet wird. Bei korrekt arbeitendem Wechselrichter 10 darf zusätzlich kein elektrischer Strom durch die Freilaufdioden D1-D3 der ersten Halbbrücke 23a fließen. Dies kann z.B. dadurch überprüft werden, indem bei abgeschaltetem Gleichrichter 21 die Entladung des Kondensators C über den Bremswiderstand 30 ermittelt und ausgewertet wird. Entspricht die Entladung der Selbstentladungskurve, die sich aufgrund des ohmschen Widerstandes des Bremswiderstandes und der Kapazität des Kondensators C ergibt, dann fließt kein elektrischer Strom über die Freilaufdioden D1-D4 der ersten Halbbrücke.

Es kann auch bei noch drehendem Motor 10 das bremsende Moment des Motors 10 gemessen oder berechnet werden.

Der Zwischenkreis 22 kann auch bei stehendem Motor 10 überprüft werden, beispielsweise durch Messung und Auswertung der elektrischen Spannung des Kondensators C. Nach Zuschalten des Bremswiderstandes 30 muss die elektrische Spannung in Abhängigkeit von der Kapazität des Kondensators und des ohmschen Widerstands des Bremswiderstandes und der eventuell vom drehenden Motor 10 rückgespeisten Energie abfallen. Es kann auch der elektrische Strom durch den Bremswiderstand ermittelt und ausgewertet werden oder bei noch drehendem Motor 10 das bremsende Moment des Motors 10 ermittelt und analysiert werden.

## Patentansprüche

1. Industrieroboter, aufweisend einen Roboterarm, der mehrere Achsen (A1-A6) und wenigstens einen elektrischen Antrieb aufweist, der einen elektrischen Motor (7-12) und eine den elektrischen Motor (7-12) ansteuernde Leistungselektronik (16) aufweist und eingerichtet ist, die relevante Achse (A1- A6) zu bewegen, wobei der Industrieroboter (1) eingerichtet ist, den elektrischen Motor (7-12) im Rahmen einer Notbremsung gleichzeitig mittels zweier voneinander unabhängiger elektrischer Strompfade kurz zu schließen, wobei der elektrische Motor (7-12) des wenigstens einen elektrischen Antriebs ein Drehstrommotor ist und die Leistungselektronik (16) des wenigstens einen elektrischen Antriebs einen den Motor (7-12) antreibenden Dreiphasen-Wechselrichter (23) und einen, einen Zwischenkreis-Kondensator (C) aufweisenden und dem Dreiphasen-Wechselrichter (23) vorgeschalteten Zwischenkreis (22) aufweist, wobei der Dreiphasen-Wechselrichter (23) eine erste Halbbrücke (23a) und eine zweite Halbbrücke (23b) aufweist, die jeweils vom Industrieroboter (1) gesteuerte Halbleiterschalter (T1-T6) aufweisen, und der Industrieroboter (1) für die Notbremsung eingerichtet ist, die Halbleiterschalter (T1-T3) der ersten Halbbrücke (23a) zu sperren und die Halbleiterschalter (T4-T6) der zweiten Halbbrücke (23b) zu schließen, so dass einer der beiden elektrischen Strompfade für die Notbremsung durch die Halbleiterschalter (T4-T6) der zweiten Halbbrücke (23b) verläuft, wobei der Industrieroboter (1) eingerichtet ist, für die Notbremsung die Halbleiterschalter (T1-T3) der ersten Halbbrücke (23a) über einen ersten Kanal (K1) zu sperren und die Halbleiterschalter (T4-T6) der zweiten Halbbrücke (23b) zu schließen, und über einen vom ersten Kanal (K1) unterschiedlichen zweiten Kanal (K2) eine externe elektrische Spannung für den Zwischenkreis (22) abzuschalten, und wobei der Zwischenkreis (22) einen ersten Bremswiderstand (30) und einen ersten Schalter (T7, 32, 33) aufweist und der Industrieroboter (1) derart eingerichtet ist, während der Notbremsung den ersten Schalter (T7, 32, 33) zu schließen, um den Bremswiderstand (30) parallel zum Zwischenkreiskondensator (C) zu schalten, so dass einer der beiden elektrischen Strompfade für die Notbremsung durch den ersten Bremswiderstand (30) verläuft und der Industrieroboter (1) einen zweiten Schalter (72, 73) aufweist und derart eingerichtet ist, während der Notbremsung den zweiten Schalter (72, 73) zu schließen, um den Motor (7-12) direkt kurz zu schließen.

2. Industrieroboter nach Anspruch 1, wobei der erste Schalter einen ersten Halbleiterschalter (T7) und/oder einen von einem ersten Relais (32) gesteuerten ersten mechanischen Schalter (33) aufweist.

3. Industrieroboter nach Anspruch 1 oder 2, aufweisend einen zweiten Bremswiderstand (71), wobei der Industrieroboter (1) derart eingerichtet ist, während der Notbremsung den zweiten Schalter (72, 73) zu schließen, um den Motor (7-12) direkt über den zweiten Bremswiderstand (72) kurz zu schließen, so dass einer der beiden elektrischen Strompfade für die Notbremsung durch den zweiten Bremswiderstand (71) verläuft.

4. Industrieroboter nach einem der Ansprüche 1 bis 3, wobei der zweite Schalter einen zweiten Halbleiterschalter und/oder einen von einem zweiten Relais (73) gesteuerten zweiten mechanischen Schalter (72) aufweist.

## Claims

1. Industrial robot, having a robotic arm, which has a plurality of axes (A1-A6) and at least one electric drive, which has an electric motor (7-12) and power electronics (16) controlling the electric motor (7-12) and is configured to move the relevant axis (A1-A6), wherein the industrial robot (1) is configured to short-circuit the electric motor (7-12) as part of emergency braking at the same time by means of two independent electric current paths, wherein the electric motor (7-12) of the at least one electric drive is a three-phase motor and the power electronics (16) of the at least one electric drive has a three-phase inverter (23) driving the motor (7-12) and an intermediate circuit (22) having an intermediate circuit capacitor (C) which is arranged upstream of the three-phase inverter (23), wherein the three-phase inverter (23) has a first half bridge (23a) and a second half bridge (23b), which each have semiconductor switches (T1-T6) controlled respectively by the industrial robot (1), and the industrial robot (1) is configured for emergency braking to block the semiconductor switches (T1-T3) of the first half bridge (23a) and to close the semiconductor switches (T4-T6) of the second half bridge (23b), so that one of the two electric current paths for the emergency braking runs through the semiconductor switches (T4-T6) of the second half bridge (23b), wherein the industrial robot (1) is configured for emergency braking to block the semiconductor switches (T1-T3) of the first half bridge (23a) via a first channel (K1) and to close the semiconductor switches (T4-T6) of the second half bridge (23b), and by means of a second channel (K2), different from the first channel (K1), to switch off an external electric voltage for the intermediate circuit (22), and wherein the intermediate circuit (22) has a first brake resistor (30) and a first switch (T7, 32, 33) and the industrial robot (1) is configured during the emergency braking to close the first switch (T7, 32, 33), in order to switch the brake resistor (30) parallel to the intermediate circuit capacitor (C), so that one of the two electric current paths for the emergency braking runs through the first brake resistor (30), and the industrial robot (1) has a second switch (72, 73) and is configured to close the second switch (72, 73) during the emergency braking in order to directly short-circuit the motor (7-12).

2. Industrial robot according to claim 1, wherein the first switch has a first semiconductor switch (T7) and/or a first mechanical switch (33) controlled by a first relay (32).

3. Industrial robot according to claim 1 or 2, having a second brake resistor (71), wherein the industrial robot (1) is configured to close the second switch (72, 73) during the emergency braking, in order to short-circuit the motor (7- 12) directly via the second brake resistor (72), so that one of the two electric current paths for the emergency braking runs through the second brake resistor (71).

4. Industrial robot according to any of claims 1 to 3, wherein the second switch has a second semiconductor switch and/or a second mechanical switch (72) controlled by a second relay (73).

## Revendications

1. Robot industriel, comprenant un bras de robot qui présente plusieurs axes (A1-A6) et au moins un entraînement électrique qui présente un moteur électrique (7-12) et une électronique de puissance (16) qui commande le moteur électrique (7-12), et qui est configuré pour déplacer l'axe concerné (A1-A6), le robot industriel (1) étant configuré pour court-circuiter le moteur électrique (7-12) simultanément au moyen de deux trajets de courant électrique indépendants l'un de l'autre dans le cadre d'un freinage d'urgence, dans lequel le moteur électrique (7-12) dudit au moins un entraînement électrique est un moteur triphasé et l'électronique de puissance (16) dudit au moins un entraînement électrique comprend un onduleur triphasé (23) entraînant le moteur (7-12) et un circuit intermédiaire (22) présentant un condensateur de circuit intermédiaire (C) et placé en amont de l'onduleur triphasé (23), dans lequel l'onduleur triphasé (23) présente un premier demi-pont (23a) et un deuxième demi-pont (23b), qui présentent chacun des commutateurs à semi-conducteurs (T1-T6) commandés par le robot industriel (1), et le robot industriel (1) est configuré pour le freinage d'urgence, pour bloquer les commutateurs à semi-conducteurs (T1-T3) du premier demi-pont (23a) et de fermer les commutateurs à semi-conducteur (T4-T6) du deuxième demi-pont (23b), de telle sorte que l'un des deux trajets de courant électrique pour le freinage d'urgence passe par les commutateurs à semi-conducteur (T4-T6) du deuxième demi-pont (23b), le robot industriel (1) étant configuré pour le freinage d'urgence, pour bloquer les commutateurs à semi-conducteur (T1-T3) du premier demi-pont (23a) via un premier canal (K1) pour le freinage d'urgence et pour fermer les commutateurs à semi-conducteurs (T4-T6) du deuxième demi-pont (23b), et pour couper une tension électrique externe pour le circuit intermédiaire (22) via un deuxième canal (K2) différent du premier canal (K1), et dans lequel le circuit intermédiaire (22) présente une première résistance de freinage (30) et un premier commutateur (T7, 32, 33), et le robot industriel (1) est configuré de telle sorte que, pendant le freinage d'urgence, il ferme le premier commutateur (T7, 32, 33), pour connecter la résistance de freinage (30) en parallèle avec le condensateur de circuit intermédiaire (C) de telle sorte que l'un des deux trajets de courant électrique pour le freinage d'urgence passe par la première résistance de freinage (30) et le robot industriel (1) présente un deuxième commutateur (72, 73) et est configuré de telle sorte que, pendant le freinage d'urgence, il ferme le deuxième commutateur (72, 73) afin de court-circuiter directement le moteur (7-12).

2. Robot industriel selon la revendication 1, dans lequel le premier commutateur présente un premier commutateur à semi-conducteur (T7) et/ou un premier commutateur mécanique (33) commandé par un premier relais (32).

3. Robot industriel selon la revendication 1 ou 2, comprenant une deuxième résistance de freinage (71), le robot industriel (1) étant configuré de telle sorte que, pendant le freinage d'urgence, il ferme le second commutateur (72, 73) afin de court-circuiter le moteur (7-12) directement via la deuxième résistance de freinage (72), de telle sorte que l'un des deux trajets de courant électrique pour le freinage d'urgence passe à travers la deuxième résistance de freinage (71).

4. Robot industriel selon l'une quelconque des revendications 1 à 3, dans lequel le second commutateur comprend un second commutateur à semi-conducteur et/ou un second commutateur mécanique (72) commandé par un second relais (73).
